# EUROPEAN PATENT APPLICATION

(11) **EP 2 390 545 A1**
(43) Date of publication of application: **30.11.2011**
(21) Application number: 10382137.7
(22) Date of filing: 24.05.2010
(51) Int. Cl.: F16L 33/30, F23D 14/06, F24C 3/08

(54) **Coupling element adapted to be coupled to a tube, mainly a gas tube, and a method for assemblying the coupling element to the tube**

(71) Applicant: Coprecitec, S.L., 20550 Aretxabaleta (Gipuzkoa) (ES)
(72) Inventor: Bellomo, Alberto, 31050 Ponzano (IT)
(74) Representative: Igartua, Ismael

(57) **Abstract**

Coupling element (1) that comprises a projection (2b) that includes a substantially truncated conical first part (3), a substantially cylindrical second part (4), both parts (3,4) being adapted to radially expand one end (20b) of a tube (20), and a substantially truncated conical negative-angle third part (5) adapted to hold the end (20b) against the projection (2b), and an assembly procedure for coupling the element (1) to a tube (20) that comprises a first stage in which the tube (20) is fixed by means of at least one gripping member, a second stage in which the end (20b) of the tube (20) radially expands when the first part (3) intersects with the interior of the end (20b), a third stage in which a substantially cylindrical surface is formed on the end (20b), and a fourth stage in which part of the end (20b) is bent towards the third part (5).

## Description

### TECHNICAL FIELD

This invention relates to a coupling element adapted to be coupled to a tube, mainly a gas tube, and an assembly procedure for the coupling element to the gas tube.

### PRIOR ART

There are known coupling elements adapted to be coupled to mainly metallic tubes preferably supplied with gas, with said connection, depending on the application for which it is to be used, having to support a series of mechanical stresses and/or airtight conditions.

There are also known gas cooking appliances that comprise a cooker hob/support plate, at least one injector, and at least one gas supplying tube connected to the injector. In some cases the coupling element is arranged coupled to the gas supplying tube to configure a connection unit that is subsequently coupled to the corresponding injector either directly or through the cooker hob. In other cases, however, the coupling element is built into the cooker hob.

Document EP225825A1 describes a gas cooking appliance that comprises an injector that includes a housing in which is housed one end of a gas supplying tube, the gas tube comprising a ring-shaped projection, an insulating seal inserted inside the housing of the injector against which the ring-shaped projection rests, and a piece that keeps the gas tube fixed to the injector, preventing them from detaching.

In ES 2253497T3 the injector is threaded on to the gas supplying tube, coupled through the cooker hob, the gas supplying tube comprising a collar that extends radially, with the result that the collar is held in a airtight manner against the cooker hob and/or against a support area of the injector.

Finally, in document US 5,735,685 the connection unit comprises an externally threaded coupling element, and a gas supplying tube, one of the ends of which includes a flange bent towards the exterior of the tube, seated in a bevelled end of the coupling element. The supplying tube includes a semi-flattened shape, that projects out radially with the result that the coupling element is arranged coupled between the sloping flange and the semi-flattened shape of the supplying tube. The coupling element includes an external thread by which it is fixed to the support plate, the supplying tube also including an internal thread on the end that comprises the bent flange, with the result that the injector is fixed to the connector element by said thread.

### DISCLOSURE OF THE INVENTION

The object of the invention is to provide a coupling element adapted to be coupled to a gas tube and a method for assembling the coupling element to the tube, as defined in the claims.

The coupling element comprises a body and a projection that projects out from a surface of the body, the projection including a substantially truncated conical truncated conical first part, a substantially cylindrical second part defined by a diameter, both the first part and second part being adapted to radially expand one end of the tube, and a substantially truncated conical negative-angle truncated conical third part adapted to hold the end of the tube against the projection.

In addition, the assembly procedure for the coupling element to a tube comprises a first stage in which the tube is fixed by means of at least one gripping member, a second stage in which the coupling element moves towards the tube, radially expanding the end of the tube when the first part of the projection of the coupling element intersects with the interior of the end of the tube, and a third stage in which the end of the expanded tube comes into contact with the second part of the projection to form a substantially cylindrical surface on the end. The assembly procedure comprises a fourth stage in which at least part of the substantially cylindrical surface is bent towards the third part of the projection, the end of the tube being held against said third part.

An optimised coupling element that is easy to manufacture and which simplifies the connection to the tube is obtained, with a tube connection that meets the mechanical and insulation requirements specified in each case being obtained.

These and other advantages and characteristics of the invention will be made evident in the light of the drawings and the detailed description thereof.

### DESCRIPTION OF THE DRAWINGS

Figure 1 shows a side view of a coupling element according to the invention.
Figure 2 shows a longitudinal cross-section of the coupling element shown in Figure 1.
Figure 3 shows a cooking appliance that comprises the coupling element shown in Figure 1.
Figure 4 is a cross-sectional view of an initial stage of the assembly procedure for the coupling element, shown in Figure 1, to a gas tube.
Figure 5 is a cross-sectional view of a connection unit that comprises the coupling element shown in Figure 1 attached to a gas tube.

### DETAILED DISCLOSURE OF THE INVENTION

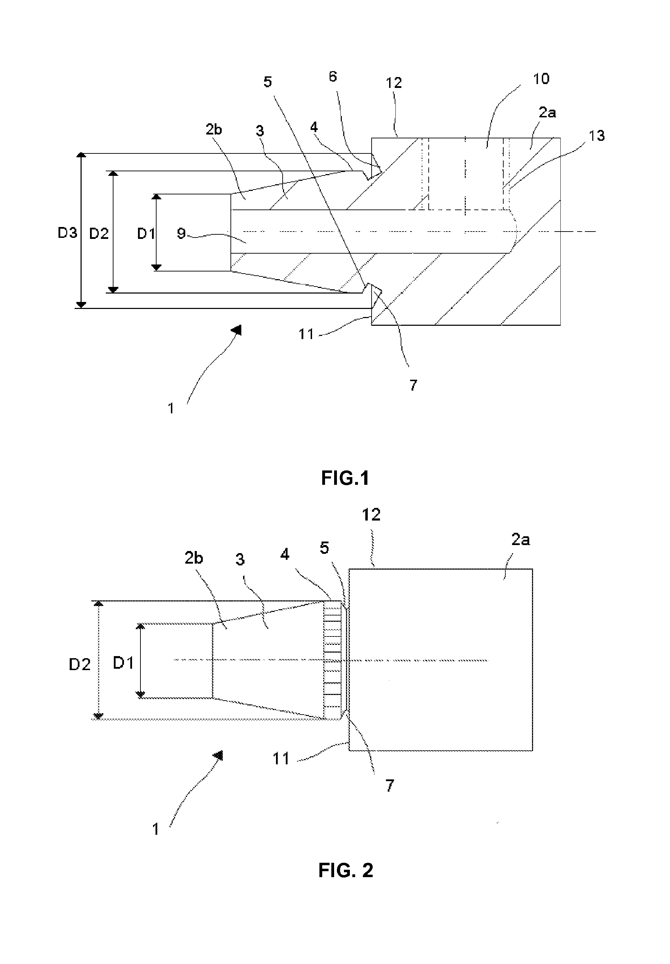

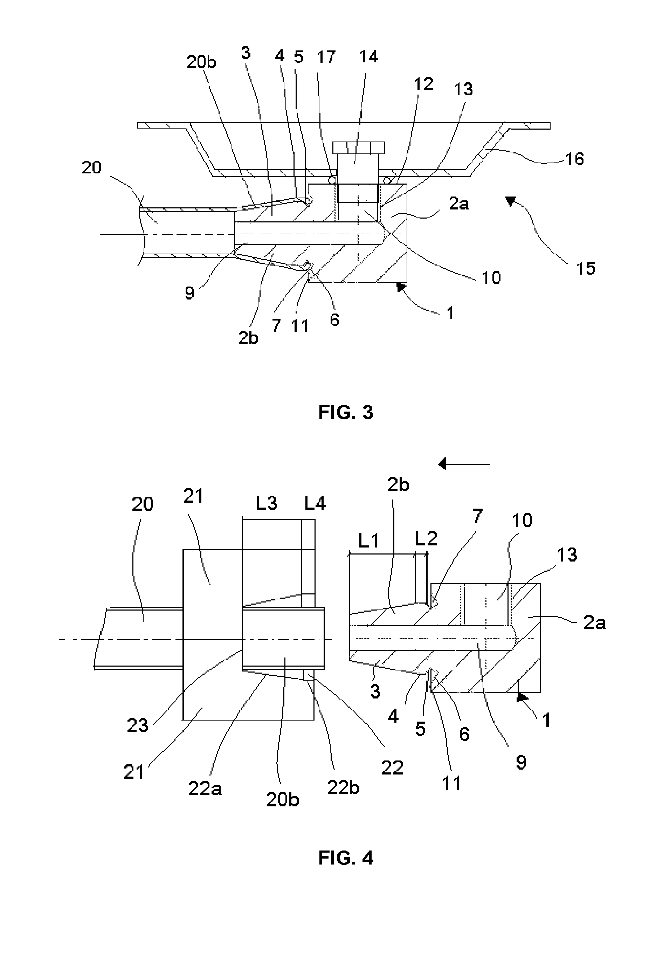

The coupling element 1 according to the invention, shown in Figures 1 to 5, comprises a substantially prismatic body 2a, and a substantially revolving projection 2b that projects out in relation to a first surface 11 of the body 2a, adapted to be coupled to a gas tube 20, shown in Figures 3 to 5, said tube 20 being preferably metallic. The coupling element 1 comprises a gas intake pipe 9 that passes longitudinally through the projection 2b and partially through the body 2a and an outlet pipe 10 that passes partially through the body 2a, both pipes 9,10 being shown in Figures 1 and 3 to 5, the outlet pipe 10 being arranged substantially orthogonal to the intake pipe 9 and both pipes 9,10 being connected to each other.

Figure 3 schematically shows a cross-section of a burner 15 of a cooking appliance, the burner 15 comprising an injector 14, a cooker hob 16, the coupling element 1 and the gas supplying tube 20 coupled to the coupling element 1. The coupling element 1 comprises an internal thread 13 on the end of the outlet pipe 10 created from a second surface 12 of the coupling element 1, the injector 14 being fixed on said thread. In addition, in order to ensure that the connection of the coupling element 1 to the injector 14 and the cooker hob 16 is sealed, the burner 15 comprises an insulating seal 17 that is arranged between the cooker hob 16 and the second surface 12 of the coupling element 1.

On the other hand, the projection 2b comprises a first part 3 substantially truncated conical at the free end, a substantially cylindrical second part 4 continuous to the first part 3, and a substantially truncated conical third part 5 continuous to the second part 4, forming a negative angle in relation to an axis substantially orthogonal to the axis of revolution of the projection 2b. Furthermore, the first part 3, the second part 4 and the third part 5 are arranged substantially concentric to each other.

Additionally, the body 2a includes a peripheral stopper 6, shown in Figures 1 and 3 to 5, which is arranged facing the third part 5 of the projection 2b, delimiting, along with the third part 5, a housing 7 adapted to house an end 20b of the tube 20. The peripheral stopper 6 is arranged substantially parallel to the third part 5 of the projection 2b.

In the embodiment shown in the figures, the second part 4 of the projection 2b comprises friction means that prevent the tube 20 from rotating in relation to the coupling element 1. The friction means include a rough surface, although in other embodiments they may include other friction means that prevent rotation. In other embodiments, for applications in which it is necessary for the tube 20 to rotate in relation to the coupling element 2, for example to enable the subsequent assembly with other elements of the cooking appliance, the second part 4 of the projection 2b may include a smooth, non-rough surface that enables said rotation of the tube 20 in relation to the coupling element 1.

Furthermore, Figure 4 shows a first stage of the assembly procedure for the coupling element 1 to the tube 20, the tube 20 being arranged fixed, fastened by means of gripping members 21 arranged symmetrically around said tube 20, the coupling element 1 moving in relation to said tube 20 to ensure coupling.

The gripping members 21 include a respective housing with the result that when said gripping members 21 are arranged fixed around the tube 20, the housings delimit a cavity 22. The end 20b of the tube 20, which is fixed to the projection 2b of the coupling element 1, projects out from a base 23 of the cavity 22. The cavity 22 is defined by a substantially truncated conical first part 22a, of a length L3 similar to the length L1 of the first part 3 of the projection 2b, and delimited by the base 23, the conicity angle being similar to the conicity angle of the first part 3 of the projection 2b, and a substantially cylindrical second part 22b, concentric and continuous to the first part 22a, of a similar length L4 to the length L2 of the second part 4 of the projection 2b.

The base 23 is substantially adjusted to the outer diameter of the tube 20. In addition, the diameter D1 of the free end of the projection 2b, shown in Figures 1 and 2, is smaller than the initial inner diameter of the tube 20, with the result that it enables the initial insertion of the tube 20 in said projection 2b of the coupling element 1. Subsequently, in a second stage, the end 20b of the tube 20 intersects with the first part 3 of the projection 2b, said end 20b of the tube 20 expanding radially and adapting to the truncated conical surface of the first part 3 of the projection 2b of the coupling element 1. The expansion of the end 20b of the tube 20 is guided by the truncated conical surface 22a of the cavity 22 of the gripping members 21.

In a third stage of the assembly process, when the second part 4 of the projection 2b comes into contact with the radially expanded part of the end 20b of the tube 20, it cooperates with the second part 22b of the cavity 22 comprised in the gripping members 21 to form a substantially cylindrical area in an area of the end 20b of the tube 20.

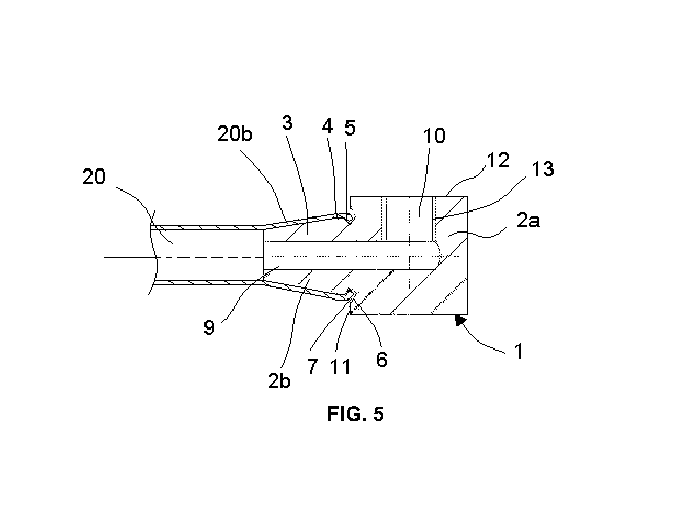

Additionally, the relationship between the outer diameter D3 of the peripheral stopper 6 and the diameter D2 of the second part 4 of the projection 2b, both diameters being shown in Figures 1 and 2, must be such that the outer diameter D3 of the peripheral stopper is larger than the diameter resulting from the maximum radial expansion of the end 20b of the tube 20, as a result of which when the peripheral stopper 6 acts against the end 20b of the tube 20 it causes part of said end 20b to bend and house itself in the housing 7, with the result that the tube 20 is fixed to the coupling element 1, as shown in Figure 5, preventing the axial movement of the tube 20 in relation to the coupling element 1.

The conicity of the first part 3 of the projection 2b varies according to the inner diameter of the tube 20, the thickness of said tube 20, the material of said tube 20 and/or the mechanical and/or insulation requirements required of the connection of the tube 20 to the coupling element.

The coupling element 1 adapted to a burner, shown in Figure 3, enables the manufacture of cooker hobs with simpler shapes, as they do not need to have the coupling element 1 built into them, thereby reducing the amount of material required to manufacture the cooker hob. In addition machining operations on said cooker hob are not necessary, the assembly of the burner is optimised and simplified, and the components for different applications are also standardised.

In other embodiments not shown in the figures, the injector 14 may be built into the coupling element 1.

Although the embodiment example describes a specific application, the cooking appliance burners, the coupling element, and the assembly procedure for said coupling element to a tube described herein may be used in other applications in which a coupling element is to be connected to a tube in a secure and rapid way by varying the geometrical parameters of the projection of the coupling element in accordance with the requirements required of said connection.

## Claims

1. Coupling element adapted to be coupled to a gas tube (20), **characterised in that** it comprises a body (2a) and a projection (2b) that projects out from a surface (11) of the body (2a), the projection (2b) including a substantially truncated conical first part (3), a substantially cylindrical second part (4) defined by a diameter (D2), both the first part (3) and second part (4) being adapted to radially expand one end (20b) of the tube (20), and a substantially truncated conical negative-angle third part (5) adapted to hold the end (20b) of the tube (20) against the projection (2b).

2. Coupling element according to the preceding claim, wherein the inner diameter of the tube (20) is smaller than the diameter (D2) of the second part (4) of the projection (2b).

3. Coupling element according to any of the preceding claims, wherein the body (2a) comprises a peripheral stopper (6) arranged facing the third part (5) of the projection (2b), the peripheral stopper (6) defining along with said third part (5) a housing (7) adapted to house the end (20b) of the tube (20).

4. Coupling element according to the preceding claim, wherein the peripheral stopper (6) is arranged substantially parallel to the third part (5).

5. Coupling element according to either of claims 3 or 4, wherein the outer diameter (D3) of the peripheral stopper (6) is larger than the diameter corresponding to the maximum radial expansion of the end (20b) of the tube (20).

6. Coupling element according to any of the preceding claims, wherein the second part (4) comprises friction means that prevent the rotation of the tube (20) in relation to the coupling element (1).

7. Coupling element according to the preceding claim, wherein the friction means include a rough surface.

8. Connection unit that comprises a coupling element (1) according to any of the preceding claims and a gas tube (20) that is arranged coupled to the projection (2b) of the coupling element (1).

9. Burner adapted to a cooking appliance that comprises a cooker hob (16), an injector (14), a coupling element (1) according to any of the preceding claims, an insulating seal (17) arranged between the cooker hob (16) and the coupling element (1), and a gas tube (20) coupled to the coupling element (1), the injector (14) being arranged threaded on to the coupling element (1), with the coupling element (1) being fixed securely in this way to the cooker hob (16).

10. Method for assembling a coupling element (1) to a tube (20), the coupling element (1) comprising a body (2a) and a projection (2b) that projects out from a surface (11) of the body (2a), the projection (2b) including a substantially truncated conical first part (3), a substantially cylindrical second part (4), both the first part (3) and second part (4) being adapted to radially expand an end (20b) of the tube (20), and a substantially truncated conical negative-angle third part (5) adapted to hold the end (20b) of the tube (20) against the projection (2b), **characterised in that** it comprises a first stage in which the tube (20) is fixed by means of at least one gripping member (21), a second stage in which the coupling element (1) moves towards the tube (20), with the end (20b) of the tube (20) being radially expanded when the first part (3) of the projection (2b) of the coupling element (1) intersects with the interior of the end (20b) of the tube (20), a third stage in which the end (20b) of the tube (20) comes into contact with the second part (4) of the projection (2b), with a substantially cylindrical surface being formed on the end (20b), and a fourth stage in which at least part of the substantially cylindrical surface is bent towards the third part (5) of the projection (2b), the end (20b) of the tube (20) being held against said third part (5).

11. Method according to the preceding claim, wherein each gripping member (21) includes a housing that delimits a cavity (22), the cavity (22) comprising a substantially truncated conical first part (22a) that cooperates with the first part (3) of the projection (2b) to guide the radial expansion of the end (20b), and a substantially cylindrical second part (22b) that cooperates with the second part (4) of the projection (2b) to form a substantially cylindrical area on the end (20b) of the tube (20).

12. Method according to the preceding claim, wherein the cavity (22) is delimited by a base (23) out from which the end (20b) of the tube (20) projects, the base (23) being arranged substantially tight to the outer diameter of the tube.

13. Method according to any of the preceding claims, wherein the body (2a) comprises a peripheral stopper (6) arranged facing the third part (5) of the projection (2b), with the result that in the fourth stage, the end (20b) of the tube (20) makes contact against the peripheral stopper (6), being housed at least partially in a housing (7) delimited by said peripheral stopper (6) and the third part (5) of the projection (2b) of the coupling element (1).
